# EUROPEAN PATENT SPECIFICATION

(11) **EP 0 902 861 B1**
(45) Date of publication and mention of the grant of the patent: **22.03.2000**
(21) Application number: 97920820.4
(22) Date of filing: 02.05.1997
(51) Int. Cl.: F01N 3/20, F01N 3/08, F01N 3/28

(54) **CATALYTIC CONVERTER FOR A LEAN BURN ENGINE**
KATALYSATOR FÜR VERBRENNUNGSMOTOR MIT VERBRENNUNG EINES MAGEREN GEMISCHES
CONVERTISSEUR CATALYTIQUE POUR MOTEUR A COMBUSTION A MELANGE PAUVRE

(30) Priority: 08.06.1996 GB 9612025
(43) Date of publication of application: 24.03.1999
(73) Proprietor: FORD MOTOR COMPANY LIMITED, Brentwood, Essex CM13 3BW (GB); FORD-WERKE AKTIENGESELLSCHAFT, 50735 Köln (DE); FORD FRANCE S. A., 92506 Rueil-Malmaison Cédex (FR)
(72) Inventor: MA, Thomas Tsoi-Hei, South Woodham Ferrers, Essex CM3 5YB (GB)
(74) Representative: Messulam, Alec Moses
(86) International application number: GB9701210
(87) International publication number: WO9747863

(56) References cited:
- PATENT ABSTRACTS OF JAPAN vol. 013, no. 275 (C-610), 23 June 1989 & JP 01 070131 A (MAZDA MOTOR CORP), 15 March 1989,
- PATENT ABSTRACTS OF JAPAN vol. 096, no. 008, 30 August 1996 & JP 08 093459 A (NISSAN MOTOR CO LTD), 9 April 1996,
- PATENT ABSTRACTS OF JAPAN vol. 017, no. 686 (M-1529), 15 December 1993 & JP 05 231140 A (MITSUBISHI MOTORS CORP), 7 September 1993,

## Description

### Field of the invention

The present invention relates to a catalytic converter containing a NOₓ trap for use in the exhaust system of a lean burn engine.

### Background of the invention

In a lean burn engine, the exhaust system typically consists of a first and a second catalyst matrix connected in series, with a NOₓ trap incorporated into the second catalyst matrix. This arrangement is to be preferred over the alternative arrangement wherein a single catalyst matrix is used and the NOₓ trap is incorporated into the single catalyst matrix. This is because of the difference in the desired operating temperature range over which the oxidation of HC and CO in the catalyst is effective (300°C to 900°C) and the temperature range over which the absorption of the NOₓ in the NOₓ trap is effective (250°C to 450°C) which is much narrower. By having the NOₓ trap in the second catalyst matrix, it is possible to optimise the operating temperature range of the NOₓ trap independently of the operating temperature range of the first catalyst matrix in order to achieve the maximum NOₓ storage efficiency.

However, a disadvantage of arranging the NOₓ trap downstream of the first catalyst matrix becomes evident during the process of purging the trap which is necessary at regular time intervals to remove some of the NOₓ previously stored in the trap. The method of purging of the trap involves changing the air/fuel ratio calibration of the engine from a steady lean setting to a temporary rich setting in order to alter the equilibrium condition at the NOₓ trap and change from the absorption mode to the desorption mode whereupon the released NOₓ is reacted with the HC and CO in the rich exhaust gases in the presence of a catalyst such that all three pollutants are converted to harmless gases.

In the above arrangement of the exhaust system, it is found that the engine must be operated with a rich setting for a considerable length of time before the purging of the NOₓ trap becomes effective. This is undesirable from the point of view of fuel economy since the fuel efficiency benefit during lean burn is typically +5% whereas the fuel efficiency penalty during rich purge is -30% compared with a stoichiometric calibration. It is clear that the purge time must be kept to a minimum in order to avoid being counterproductive in achieving good overall fuel economy with a lean burn engine.

### Object of the present invention

The present invention seeks to reduce the purge time for the NOₓ trap in the exhaust system of a lean burn engine.

### Summary of the invention

According to the present invention, there is provided a catalytic converter for a lean burn spark ignition internal combustion engine comprising a first and a second catalyst matrix, each containing a three-way catalyst, connected in series with one another, the first matrix having a coating that includes an oxygen storage material and the second having a coating that includes a NOₓ storage material, wherein the catalytic converter is designed in such a manner as to allow a proportion of the exhaust gases to flow to the second matrix without the said proportion losing its HC and CO content by reacting with the oxygen stored in the coating of the first matrix.

In one embodiment of the invention, a pipe is provided to bypass permanently the first matrix to allow the desired proportion of the exhaust gases to reach the second matrix without at any time flowing through the first matrix.

Such an embodiment requires an alteration to the housing of the matrix which adds to manufacturing cost and the bypassing upsets the flow distribution through the matrix, which is undesirable because it affects the performance of the catalyst and can cause hot spots that may damage the matrix. This embodiment, though not preferred, does however illustrate the principle of the invention of allowing a small proportion of the exhaust gases to reach the second matrix without having their HC and CO content reduced by the oxygen stored in the coating of the first matrix.

A simpler way of creating such a bypass would be to form a bypass hole through the body of the first matrix. Here the hole or holes can be positioned to maintain a symmetrical gas flow distribution and does not require the housing to be modified. The flow distribution will still not be even as gases will preferentially flow through the larger bypass holes and will pass through these holes at higher speed.

A further possibility would be to make the mesh size of the first matrix sufficiently large so as to allow the proportion of the gases to pass through the flow channels of the first matrix without coming into contact with the walls of the first matrix. Such an embodiment is difficult to engineer as it is difficult to arrive at an optimum mesh size in relation of the length to allow just the required proportion of the gases to pass through unreacted.

In the preferred embodiment of the invention, selected flow channels of the first matrix are arranged to contain no oxygen storage material. In this case, the gas flow through the matrix need not be modified in any way and only the chemical properties of selected flow channels of the first matrix are modified to ensure that a proportion of the exhaust gases can pass through them without reacting with stored oxygen. Such a matrix may be produced simply by blanking off the selected flow channels during processing of the ceramic substrate to apply the oxygen storage coating to the substrate.

In the prior art, the excessive purge time comes about from the fact that the first matrix is a three-way catalyst which is necessary for use with the engine when it is running at a stoichiometric air/fuel ratio calibration during high load operations. The three-way catalyst is capable of redox reaction in reducing NOₓ and oxidising HC and CO within the same matrix and contains oxygen storage components for preventing breakthrough of HC and CO through the matrix during transient rich excursions when there is a temporary shortage of oxygen in the exhaust gases. During the purging of the NOₓ trap of the second matrix, when the engine air/fuel ratio is set rich, the stored oxygen in the first matrix intercepts the HC and CO in the rich exhaust gases and delays the breakthrough of these constituents which are necessary for the purging of the NOₓ trap. The consequence of this is that the rich setting must be maintained for a considerable time in order to allow for the delay of the breakthrough of HC and CO reaching the NOₓ trap.

Short rich air/fuel ratio excursions which often occur during gear changes and decelerations of the vehicle are also not effective for purging the NOₓ trap in the prior art system precisely because the oxygen storage in the first catalyst matrix is designed to neutralise these transient rich excursions and prevent breakthrough of HC and CO reaching the NOₓ trap.

By contrast, in the present invention, a predetermined proportion of the exhaust flow is intentionally carried directly to the NOₓ trap in the second matrix without being reacted with stored oxygen in the first matrix. Thus any short rich air/fuel ratio excursion will be immediately effective for purging of the NOₓ trap. In this context, the NOₓ trap has an equivalent function to the oxygen storage in that it neutralises the transient rich excursions and prevents breakthrough of HC and CO through the second matrix. This applies for both deliberate purging when the air/fuel ratio of the engine is intentionally perturbed with a rich excursion and incidental purging from transient rich excursions during gear changes and decelerations.

Typically the duration of the rich excursions which are effective for purging the NOₓ trap in the present invention is of the order of 0.3 seconds compared with 1.5 seconds required in the prior art systems. As explained above, this reduction in the purge time represents a significant reduction in the fuel economy penalty.

Moreover, under urban driving conditions, the incidental rich excursions during frequent gear changes and decelerations, which typically account for 6% and 4% respectively of the overall fuel consumption of the vehicle, will be sufficient to maintain a high level of purge in the NOₓ trap without having to introduce additional deliberate purges by setting the engine to run rich. In this case, there will be no fuel economy penalty at all as a consequence of the purging of the NOₓ trap.

### Brief description of the drawings

The invention will now be described further, by way of example, with reference to the accompanying drawings, in which :
Figure 1 is a schematic section through a catalytic converter in accordance with a first embodiment of the invention, and
Figures 2 and 3 are schematic sections similar to that of Figure 1 showing two further embodiments of the invention.

### Detailed description of the preferred embodiments

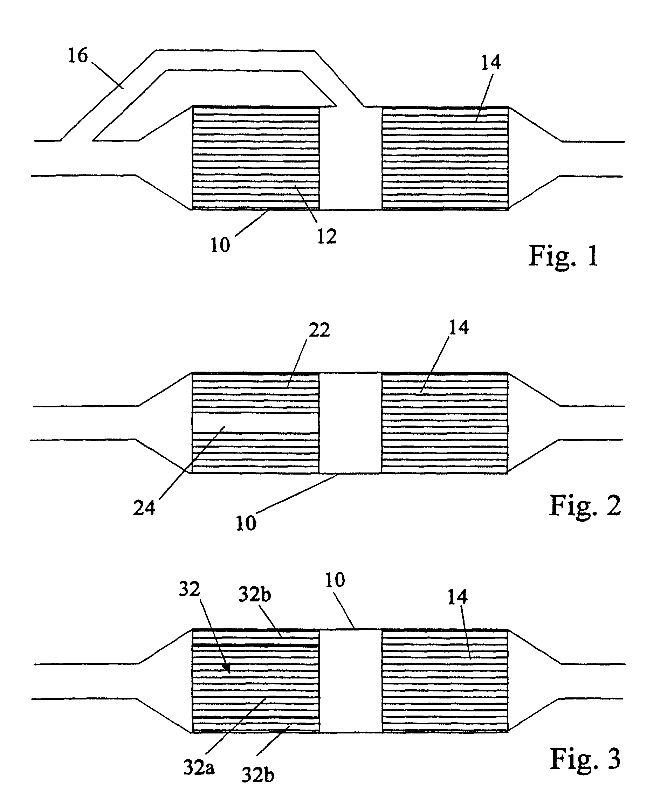

Figure 1 shows a catalytic converter 10 having two matrices 12 and 14 arranged in series with one another in the direction of gas flow. The first matrix 12, arranged at the upstream end of the converter 10, is a three way catalyst that has an oxygen storage coating. The second matrix 14 is a three way catalyst the coating of which incorporates a NOₓ trap. A bypass pipe 16 allows a proportion of the exhaust gases to reach the second matrix 14 without passing through the first matrix 12.

In common with all the embodiments of the invention to be described below, the embodiment of Figure 1 is intended to allow purging of the NOₓ trap in the second matrix by enriching the fuel mixture supplied to the engine for as short a time as possible. This is achieved because immediately following the fuelling disturbance the resulting HC and CO in the exhaust gases will reach the second matrix 14 by way of the bypass pipe 16 without having first been reacted with stored oxygen in the first matrix 12. On reaching the second matrix 14 the reducing atmosphere will cause the stored NOₓ in the NOₓ trap to be released and in the presence of the three way catalyst the NOₓ will react with the HC and CO to produce N₂, H₂O and CO₂ which can then be safely discharged.

In the embodiment of Figure 2 the reducing atmosphere required for purging the NOₓ trap flows through a bypass passage having the form of a central hole 24 in the first matrix 22. This avoids the need to modify the housing of the catalytic converter 10. The hole 24 is in other respects analogous to the bypass pipe 16 in Figure 1. Instead of providing a separate large hole 24 for the unreacted gases, a further possibility is to enlarge all the flow channels of the matrix so that they all allow a proportion of the exhaust gases to pass through them unreacted.

In the embodiment of Figure 3 the first matrix 32 has flow channels that are all of the same cross-section so that the flow distribution through the first matrix 12 is not disturbed in any way. However in contrast with a conventional first matrix, the procedure adopted to apply to the matrix substrate a catalyst and oxygen storage coating is modified so that the oxygen storage coating is applied to a central section 32a in the normal manner, as represented by the shading in Figure 3, but the surrounding annulus 32b is allowed to remain uncoated at least with the oxygen storage component. This can be achieved by masking the ends of the substrate to prevent the applied fluids from penetrating into selected flow channels during the coating process. The reducing atmosphere required for purging the NOₓ trap flows through the annulus 32b but is unreacted because there is no stored oxygen in the annulus 32b. This embodiment has the advantage that the flow distribution is totally unaffected and no modification whatever is required to the substrate geometry or the converter housing.

The uncoated channels are located in the outer periphery of the first matrix 32 because under high flow rates a lesser proportion flows through these channels than through the centre of the matrix. Therefore the reduced efficiency of the matrix 32 would be less perceptible under high load conditions.

## Claims

1. A catalytic converter for a lean burn spark ignition internal combustion engine comprising a first (12,22,32) and a second (14) catalyst matrix, each containing a three-way catalyst, connected in series with one another, the first matrix (12,22,32) having a coating that includes an oxygen storage material and the second matrix (14) having a coating that includes a NOₓ storage material, the catalytic converter being designed in such a manner as to allow a proportion of the exhaust gases to flow to the second matrix (14) without the said proportion losing its HC and CO content by reacting with the oxygen stored in the coating of the first matrix (12,22,32).

2. A catalytic converter as claimed in claim 1, wherein a pipe (16) is provided to bypass permanently the first matrix (12) to allow the desired proportion of the exhaust gases to reach the second matrix (14) without at any time flowing through the first matrix (12).

3. A catalytic converter as claimed in claim 1 or 2, wherein a bypass hole (24) is formed through the body of the first matrix (22).

4. A catalytic converter as claimed in claim 1, wherein the mesh size of the first matrix is sufficiently large to allow the proportion of the gases to pass through the flow channels of the first matrix without coming into contact with the walls of the first matrix.

5. A catalytic converter as claimed in claim 1, wherein selected flow channels (32b) of the first matrix (32) are arranged to contain no oxygen storage material.

6. A catalytic converter as claimed in claim 5, wherein the flow channels (32) containing no oxygen storage material are located in an annulus about the central axis of the first matrix (32).

## Patentansprüche

1. Ein Katalysator für einen Otto-Magermotor, der eine erste (12, 22, 32) und eine zweite (14) Katalysatormatrix umfaßt, von denen jede einen- in Reihe miteinander verbundenen - Drei-Wege-Katalysator enthält, wobei die erste Matrix (12, 22, 32) eine Beschichtung besitzt, die ein Sauerstoff-Speichermaterial einschließt, und die zweite Matrix (14) eine Beschichtung besitzt, die ein NOₓ-Speichermatehal einschließt; wobei der Katalysator in einer solchen Art und Weise konstruiert ist, daß einem Teil der Abgase erlaubt wird durch die zweite Matrix (14) zu strömen, ohne daß dieser Teil - durch Reaktion mit dem in der Beschichtung der ersten Matrix (12, 22, 32) gespeicherten Sauerstoff - seinen HC- und CO-Anteil verliert.

2. Ein Katalysator nach Anspruch 1, in dem eine Leitung (16) zur dauerhaften Umgehung der ersten Matrix (12) bereitgestellt wird, um dem gewünschten Teil der Abgase das Erreichen der zweiten Matrix (14) zu erlauben, ohne daß er zu irgend einer Zeit durch die erste Matrix (12) strömt.

3. Ein Katalysator nach Anspruch 1 oder 2, in dem ein Umgehungsloch (24) durch den Körper der ersten Matrix (22) gebildet wird.

4. Ein Katalysator nach Anspruch 1, in dem die Maschenweite der ersten Matrix ausreichend groß ist, um dem Teil der Gase das Passieren der Durchflußkanäle der ersten Matrix zu erlauben, ohne mit den Wänden der ersten Matrix in Kontakt zu treten.

5. Ein Katalysator nach Anspruch 1, worin ausgewählte Durchflußkanäle (32b) der ersten Matrix (32) angeordnet sind, um kein Sauerstoff-Speichermaterial zu enthalten.

6. Ein Katalysator nach Anspruch 5, worin die kein Sauerstoff-Speichermaterial enthaltenden Durchflußkanäle (32b) in einem Kreisring um die zentrale Achse der ersten Matrix (32) herum angeordnet sind.

## Revendications

1. Convertisseur catalytique pour un moteur à combustion interne à allumage commandé opérant en régime pauvre comprenant une première (12, 22, 32) et deuxième (14) matrice catalytique, chacune contenant un catalyseur à trois voies, monté en série l'un par rapport à l'autre, la première matrice (12, 22, 32) ayant un revêtement qui comprend un matériau de stockage d'oxygène et la deuxième matrice (14) ayant un revêtement qui comprend un matériau de stockage de NOₓ, le convertisseur catalytique étant conçu de manière à ce qu'une fraction des gaz d'échappement puisse s'écouler vers la deuxième matrice (14) sans que ladite fraction ne voit sa teneur en HC et CO diminuer en réagissant avec l'oxygène stocké dans le revêtement de la première matrice (12, 22, 32).

2. Convertisseur catalytique selon la revendication 1, dans lequel un tuyau (16) est prévu pour contourner en permanence la première matrice (12) pour qu'une fraction prédéterminée des gaz d'échappement puisse atteindre la deuxième matrice (14) sans passer à aucun moment au travers de la première matrice (12).

3. Convertisseur catalytique selon la revendication 1 ou 2, dans lequel un orifice de contournement (24) est pratiqué à travers le corps de la première matrice (22).

4. Convertisseur catalytique selon la revendication 1, dans lequel l'ouverture de maille de la première matrice est suffisamment grande pour qu'une fraction des gaz puisse passer au travers des canaux d'écoulement de la première matrice sans entrer en contact avec les parois de la première matrice.

5. Convertisseur catalytique selon la revendication 1, dans lequel il y a disposition dans la première matrice (32) de canaux d'écoulement prédéterminés (32b) ne contenant pas de matériau de stockage d'oxygène.

6. Convertisseur catalytique selon la revendication 5, dans lequel les canaux d'écoulement (32) ne contenant pas de matériau de stockage d'oxygène sont situés dans une couronne autour de l'axe central de la première matrice (32).
